# EUROPEAN PATENT SPECIFICATION

(11) **EP 3 247 762 B1**
(45) Date of publication and mention of the grant of the patent: **29.05.2019**
(21) Application number: 15701595.9
(22) Date of filing: 19.01.2015
(51) Int. Cl.: C09K 11/06, G01N 27/12, G01N 33/00

(54) **VOLATILE ORGANIC COMPOUND VAPOUR SENSING COMPOUNDS**
MESSVERBINDUNGEN VON DAMPF VON FLÜCHTIGEN ORGANISCHEN VERBINDUNGEN
COMPOSÉS DE DÉTECTION DE VAPEURS DE COMPOSÉ ORGANIQUE VOLATIL

(43) Date of publication of application: 29.11.2017
(73) Proprietor: Robert Bosch GmbH, 70442 Stuttgart (DE)
(72) Inventor: YAN, Yan, Singapore 573943 (SG); PALALE, Suresh, Singapore 573943 (SG); GOH, Rui Quan, Singapore 573943 (SG); WOLST, Oliver, Singapore 573943 (SG)
(86) International application number: PCT/SG2015/000012
(87) International publication number: WO 2016/118072

(56) References cited:
- CN-A- 101 196 489
- CN-A- 102 692 445
- DE-A1- 19 956 302

## Description

### Technical Field

The invention relates to volatile organic compound vapour sensing compounds. In particular, present invention relates to said sensing compounds comprising a metal phthalocycanine. Furthermore, the invention relates to the tuning sensitivity of the metal phthalocyanine by incorporation of substitution groups.

### Background

Volatile organic compound (VOC) vapours are primary sources of indoor environmental pollutants and are harmful to the human and animal body. There are notable correlations between VOC emissions and different kinds of cancers. Therefore, more work is needed concerning VOC vapours sensing and sensor development. Furthermore, indoor air quality information can be given as CO₂ equivalants by measuring total VOC concentrations.

Existing VOC vapour sensing inorganic materials include surfactant-coated metal alloy nanoparticles, coated single-walled carbon nanotubes, metal oxide semiconductors such as zinc oxide (ZnO), tin dioxide (SnO₂), tungsten trioxide (WO₃), and titanium dioxide (TiO₂). However, such inorganic sensing materials have shortcomings including high energy consumption, low selectivity and sensitivity.

Existing VOC vapour sensing organic materials include compounds comprising a polythiophene, a polypyrrole, and a polyaniline. However, the unsatisfying sensitivity, selectivity, processability, and life time impede them as suitable candidates as VOC vapour sensing materials. CN102692445A discloses an organic gas sensor with various substituted metal phthalocyanines.

Therefore, there remains a need to provide for alternative VOC vapour sensing compounds that overcome, or at least alleviate, the above problems.

### Summary

Present inventors have herein identified phthalocyanine, a versatile aromatic macrocycle, as a promising VOC vapour sensing compound. Compared to other organic macrocyclic compounds, phthalocyanine has good processability, stability, tunability, and high selectivity achievable by tuning its central cavity and substitution groups.

Thus, in accordance with one aspect of the invention, there is provided a use of a compound of Formula (I) 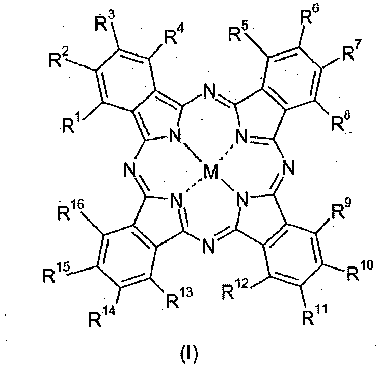 as a volatile organic compound vapour sensor,
wherein:
M is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺, and V⁵⁺; and
each of R¹ to R¹⁶ is independently a H or an electron withdrawing group moiety selected from the group consisting of -NO₂, -NH₃⁺, -SO₃H, -CN, -C(O)Cl, -COOH, -CHO, -F, -Cl, -Br, -I,-CF₃, and -CCl₃, with the provisio that not all of R¹ to R¹⁶ are H.

In various embodiments, the compound of Formula (I) may be used to detect volatile organic compounds such as amines, nitrogen-containing organic compounds besides amines, sulfur-containing organic compounds, phosphines, alcohols, carbonyl compounds (including ketones, aldehydes, esters, ethers), water, aromatic compounds, alkenes, alkynes, and preferably acetone.

In various embodiments, use of the compound of Formula (I) may incude use as a sensing layer in various transducers like a chemiresistor, a capacitor, a field effect transistor (FET), an optical-based sensor, or a mass-based sensor.

In another aspect of the invention, a sensor for detecting a volatile organic compound vapour is disclosed. The sensor comprises a compound of Formula (I) 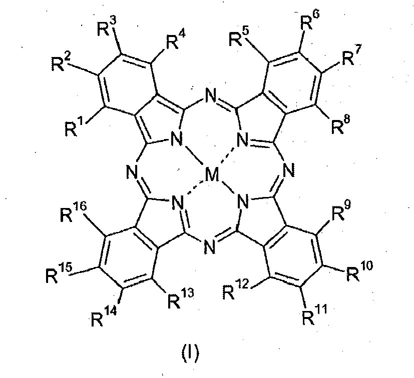 wherein:
M is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺, and V⁵⁺; and
each of R¹ to R¹⁶ is independently a H or an electron withdrawing group moiety selected from the group consisting of -NO₂, -NH₃⁺, -SO₃H, -CN; -C(O)Cl, -COOH, -CHO, -F,-Cl, -Br, -I, -CF₃, and -CCl₃, with the provisio that not all of R¹ to R¹⁶ are H.

### Brief Description of the Drawings

In the drawings, like reference characters generally refer to the same parts throughout the different views. The drawings are not necessarily drawn to scale, emphasis instead generally being placed upon illustrating the principles of various embodiments. In the following description, various embodiments of the invention are described with reference to the following drawings.
Figure 1 shows the response of Al(III)-phthalocyanine and Cu(II)-phthalocyanine sensing layer to acetone from 0.2 ppm to 3 ppm.
Figure 2 shows the response of AlPc-EWG to acetone at 0.2, 0.5, 1, 2, and 3 ppm. The results are reproducible for three continuous cycles.

### Description

The following detailed description refers to the accompanying drawings that show, by way of illustration, specific details and embodiments in which the invention may be practised. These embodiments are described in sufficient detail to enable those skilled in the art to practise the invention. Other embodiments may be utilized and structural and chemical changes may be made without departing from the scope of the invention. The various embodiments are not necessarily mutually exclusive, as some embodiments can be combined with one or more other embodiments to form new embodiments.

Phthalocyanine demonstrates various advantages over other organic compounds as a VOC sensing material. For example, phthalocyanine has good processability, stability, tunability, and high selectivity achievable by tuning its central cavity and substitution groups.

Accordingly, present inventors have shown that selectivity of the present metal phthalocyanine towards VOC vapour detection can be tuned and therefore enhanced by selectively manipulating the metal centre and substitution groups on the phthalocyanine core structure. Furthermore, adjusting the number of substitution groups on the phthalocyanine core structure also helps to further fine-tune the sensitivity and selectivity.

The interaction, and therefore detection, of a VOC vapour and the present metal phthalocyanine sensing compound is based on Lewis acid/base concept. Briefly, Lewis acid is a species that accepts an electron pair and has vacant orbitals. Lewis base is a species that donates an electron pair and has lone pair of electrons. When a Lewis base donates its lone pair of electrons to a Lewis acid, an acid-base complex or complex ion is formed.

In the present context, the metal cation in the metal phthalocyanine acts as a Lewis acid since the metal cation has an unfilled valence shell and is thus able to accept electrons from a VOC molecule, such as but not limited to acetone, with a lone pair of electrons on the oxygen atom acting as a Lewis base.

While in theory all metal centres could be treated as a Lewis acid to interact with Lewis base, many VOCs, including acetone, are relatively weak Lewis base and therefore stronger Lewis acids are required for an effective sensing. In this context, present inventors have compared different metal centres to study their strengths as suitable Lewis acids: Al³⁺, Fe³⁺ and Cu²⁺. As confirmed by studies (to be described in later paragraphs), the attacking strength of Al(III)-phthalocyanine and Fe(III)-phthalocyanine are higher and therefore the sensing response is stronger than that of Cu(ll)-phthalocyanine since Al(III) and Fe(III) cations are more positively charged.

Furthermore, according to Hard Soft Acid Base theory, hard acids and bases are small, compact, and non-polarizable. Soft acids and bases are larger, with a more diffuse distribution of electrons. Hard acids react preferentially with hard bases and soft acids react preferentially with soft bases. Acetone, for example, is regarded as a hard Lewis base and prefers to react with a hard Lewis acid. Table 1 lists the hardness degree for the above-mentioned metal centres (to be described in later paragraphs). Based on the hardness degree, it can be readily seen that the acetone prefers to react with Al(III)-phthalocyanine, Fe(III)-phthalocyanine, and Cu(II)-phthalocyanine in descending order.

As mentioned above, in addition to tuning the metal centre of the phthalocyanine core structure, tuning of the substitution groups can also enhance the sensitivity of present sensing compounds to VOC vapour.

In present context, the sensitivity to VOC may be influenced by the acidity of the metal phthalocyanine. The acidity of the Lewis acid, i.e. the metal phthalocyanine, can be tuned by introducing an electron withdrawing group as a substitution group. An electron withdrawing group (EWG) is a functional group that can attract electron density towards itself from a conjugated *π* system. The electron withdrawing group present in the Lewis acid increases its electron deficiency and thus enhances its electron accepting ability, thereby increasing its interaction strength with a Lewis base.

On the other hand, an electron donating group present in a Lewis acid increases its electron density and thus reduces its electron accepting ability, thereby decreasing its interaction strength with a Lewis base. An electron donating group (EDG) is a functional group that can donate electron density to a conjugated *π* system. Accordingly, it is the intention of present invention to avoid or minimise the use of an electron donating group as a substitution group in present metal phthalocyanine.

Based on the above design parameters, present invention therefore relates to a use of a compound of Formula (I) 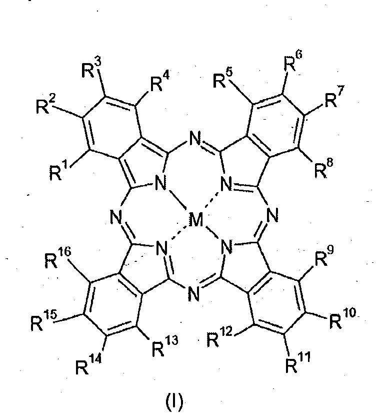 as a volatile organic compound vapour sensor, wherein:
M is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺, and V⁵⁺; and
each of R¹ to R¹⁶ is independently a H or an electron withdrawing group moiety selected from the group consisting of -NO₂, -NH₃⁺, -SO₃H, -CN, -C(O)Cl, -COOH, -CHO, -F, -CI, -Br, -I, - CF₃, and -CCl₃, with the provisio that not all of R¹ to R¹⁶ are H.

In addition, the above-listed moieties are electron withdrawing relative to H atom.

M in Formula (I) is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺ and V⁵⁺.

For Example, M in Formula (I) may be Al³⁺ or Fe³⁺, preferably Al³⁺.

In various embodiments, in Formula (I) at least one of R¹ to R¹⁶ is an electron donating group moiety.

In certain embodiments, in Formula (I) at least one of R¹ to R¹⁶ is F. For example, at least R⁴, R⁸, R¹², and R¹⁶ are F.

In yet further embodiments, in Formula (I) R⁴, R⁸, R¹², and R¹⁶ are F and R¹, R², R³, R⁵, R⁶, R⁷, R⁹, R¹⁰, R¹¹, R¹³, R¹⁴, and R¹⁵ are H.

In alternative embodiments, in Formula (I) R⁴, R⁸, R¹², and R¹⁶ are F and each of R¹, R², R³, R⁵, R⁶, R⁷, R⁹, R¹⁰, R¹¹, R¹³, R¹⁴, and R¹⁵ is any of the listed electron withdrawing group moiety other than F.

In one embodiment, in Formula (I) M is Al³⁺, R⁴, R⁸, R¹², and R¹⁶ are F, and R¹, R², R³, R⁵, R⁶, R⁷, R⁹, R¹⁰, R¹¹, R¹³, R¹⁴, and R¹⁵ are H.

The VOC vapour sensor of Formula (I) is able to detect VOCs including, but not limited to, amines, nitrogen-containing organic compounds besides amines, sulfur-containing organic compounds, phosphines, alcohols, carbonyl compounds (including ketones, aldehydes, esters, ethers), water, aromatic compounds, alkenes, alkynes, and preferably acetone. In one embodiment, the VOC vapour sensor of Formula (I) detects acetone.

In various embodiments, use of the compound of Formula (I) may incude use as a sensing layer in various transducers like a chemiresistor, a capacitor, a field effect transistor (FET), an optical-based sensor, or a mass-based sensor.

In another aspect of the invention, a sensor for detecting a volatile organic compound vapour is disclosed. The sensor comprises a compound of Formula (I) 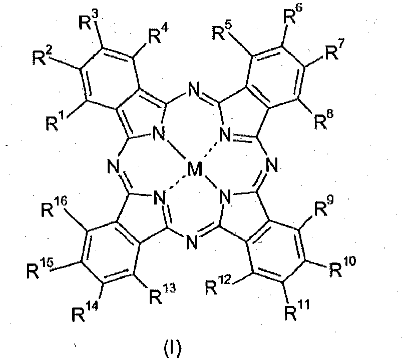 wherein:
M is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺, and V⁵⁺; and
each of R¹ to R¹⁶ is independently a H or an electron withdrawing group moiety selected from the group consisting of -NO₂, -NH₃⁺, -SO₃H, -CN, -C(O)Cl, -COOH, -CHO, -F, - Cl, -Br, -I, -CF₃, and -CCl₃, with the provisio that not all of R¹ to R¹⁶ are H.

In order that the invention may be readily understood and put into practical effect, particular embodiments will now be described by way of the following non-limiting examples.

### Examples

### Tuning sensitivity to VOC by tuning metal centres

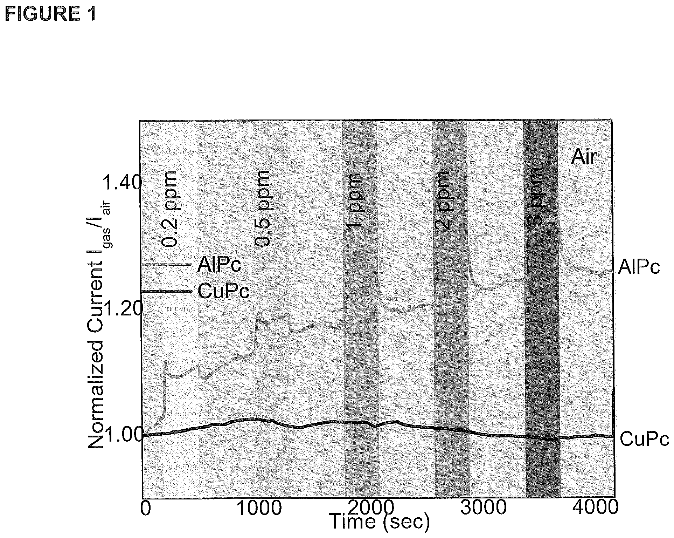

Chemiresistors with various metal phthalocyanine layers were prepared by evaporation method, which included Al(III)-phthalocyanine, Fe(III)-phthalocyanine, and Cu(II)-phthalocyanine. The thickness of each sensing layer was 60 nm. The respective current change at applied 5 V when exposed to acetone vapour at various concentrations was evaluated. Cu(II)-phthalocyanine showed no response to acetone even at the highest evaluated concentration level of 10 ppm. Fe(III)-phthalocyanine showed better sensitivity than Cu(II)-phthalocyanine and the lowest detection limit was 1 ppm. Al(III)-phthalocyanine was the most sensitive layer and was able to detect as low as 0.2 ppm (Figure 1).

To better quantify the sensitivity of the respective sensing layer, the sensitivity defined by "% sensitivity/ ppm" was evaluated. First, the % current change (equating to [(*I*₀-*I*_{f})/ *I*₀]x100) was determined. Then the linear trend was obtained from the calculated % current change at different concentrations, and the slope of the line was regarded as "% sensitivity/ ppm".

The sensitivity results for the various sensing layers are summarized in Table 1. The trend of sensitivity correlates with the hardness of the various metal centres. Additionally, it was also found that work function of the Al(III)-phthalocyanine layer will change when exposed to acetone vapour at low concentrations.

**Table 1. Correlation between hardness of the metal centre and the sensitivity to acetone**

| | Al(III)-phthalocyanine | Fe(III)-phthalocyanine | Cu(II)-phthalocyanine |
|---|---|---|---|
| Hardness | 45.77 | 12.08 | 8.22 |
| % sensitivity/ ppm | 16.47 | 3.31 | 0 |

### Tuning sensitivity to VOC by tuning substitution groups

Chemiresistors with various substituted Al-phthalocyanine layers were prepared, which included Al(III)-phthalocyanine without substitution ("AlPc"), Al(III)-phthalocyanine substituted with -S(phenyl) at each of R⁴, R⁸, R¹², and R¹⁶ ("AlPc-EDG"), and Al(III)-phthalocyanine substituted with -F at each of R⁴, R⁸, R¹², and R¹⁶ ("AlPc-EWG"). The thickness of each sensing layer was 60 nm. The respective current change at applied 5 V when exposed to acetone vapour at 0.2, 0.5, 1, 2, and 3 ppm were evaluated.

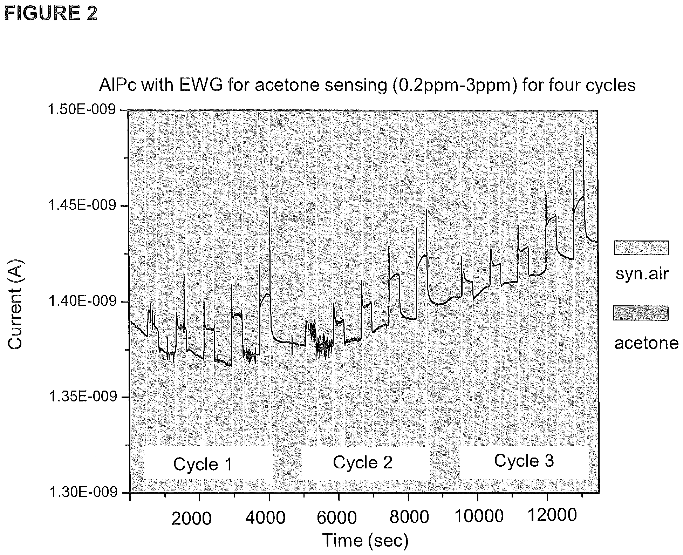

AlPc-EDG showed the lowest sensitivity while AIPc-EWG showed the highest sensitivity. The results are summarized in Table 2. Additionally, AIPc-EWG showed good dose-response and reproducibility for acetone sensing at low concentration (Figure 2).

**Table 2. Correlation between substitution group and the sensitivity to acetone**

| | AlPc-EDG | AlPc | AlPc-EWG |
|---|---|---|---|
| % sensitivity/ ppm | 0.155 | 0.286 | 0.400 |

## Claims

1. Use of a compound of Formula (I) 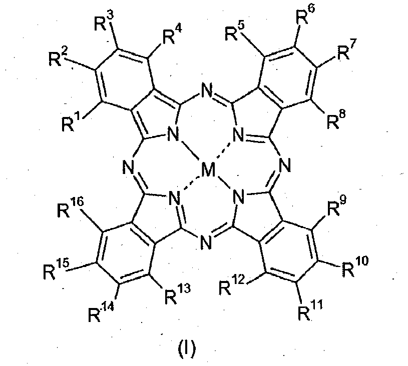 as a volatile organic compound vapour sensor,
wherein:
M is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺, and V⁵⁺; and
each of R¹ to R¹⁶ is independently a H or an electron withdrawing group moiety selected from the group consisting of -NO₂, -NH₃⁺, -SO₃H, -CN, -C(O)Cl, -COOH, -CHO, -F, - Cl, -Br, -I, -CF₃, and -CCl₃,
with the provisio that not all of R¹ to R¹⁶ are H.

2. Use of claim 1, wherein M is Al³⁺ or Fe³⁺.

3. Use of claim 1, wherein M is Al³⁺.

4. Use of claim 1, wherein at least one of R¹ to R¹⁶ is F.

5. Use of claim 1, wherein at least R⁴, R⁸, R¹², and R¹⁶ are F.

6. Use of claim 1, wherein R⁴, R⁸, R¹², and R¹⁶ are F and R¹, R², R³, R⁵, R⁶, R⁷, R⁹, R¹⁰, R¹¹, R¹³, R¹⁴, and R¹⁵ are H.

7. Use of claim 1, wherein M is Al³⁺, R⁴, R⁸, R¹², and R¹⁶ are F, and R¹, R², R³, R⁵, R⁶, R⁷, R⁹, R¹⁰, R¹¹, R¹³, R¹⁴, and R¹⁵ are H.

8. Use of claim 1, wherein the volatile organic compound is an amine, a nitrogen-containing organic compound besides amine, a sulfur-containing organic compound, phosphine, an alcohol, a carbonyl compound (including ketones, aldehydes, esters, ethers), water, an aromatic compound, an alkene, or an alkyne, preferably acetone.

9. Use of claim 1, wherein the compound of Formula (I) is comprised as a sensing layer in a chemiresistor, a capacitor, a field effect transistor (FET), an optical-based sensor, or a mass-based sensor.

10. A sensor for detecting a volatile organic compound vapour, the sensor comprising a compound of Formula (I) 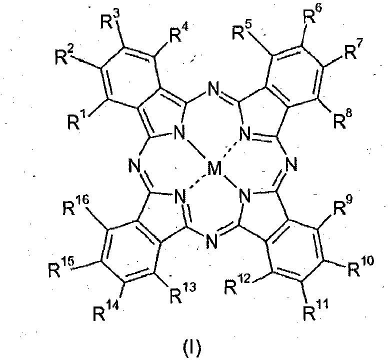 wherein:
M is selected from the group consisting of Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺, and V⁵⁺; and
each of R¹ to R¹⁶ is independently a H or an electron withdrawing group moiety selected from the group consisting of -NO₂, -NH₃⁺, -SO₃H, -CN, -C(O)Cl, -COOH, -CHO, -F, - Cl, -Br, -I, -CF₃, and -CCl₃,
with the provisio that not all of R¹ to R¹⁶ are H.

## Patentansprüche

1. Verwendung einer Verbindung der Formel (I) 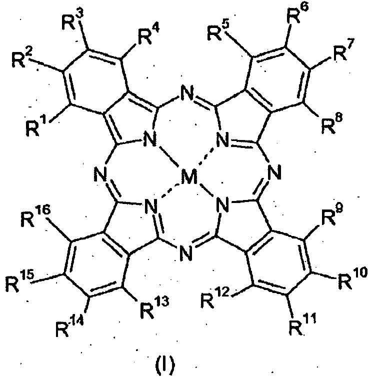 als Sensor für Dampf einer flüchtigen organischen Verbindung,
wobei:
M aus der Gruppe bestehend aus Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺ und V⁵⁺ ausgewählt ist; und
R¹ bis R¹⁶ jeweils unabhängig für ein H oder eine elektronenziehende Gruppierung, die aus der Gruppe bestehend aus -NO₂, -NH₃⁺, -SO₃H, -CN, -C(O)Cl, -COOH, -CHO, -F, -Cl, -Br, -I, -CF₃ und -CCl₃ ausgewählt ist, steht,
mit der Maßgabe, dass nicht alle Variablen R¹ bis R¹⁶ für H stehen.

2. Verwendung nach Anspruch 1, wobei M für Al³⁺ oder Fe³⁺ steht.

3. Verwendung nach Anspruch 1, wobei M für Al³⁺ steht.

4. Verwendung nach Anspruch 1, wobei mindestens eine der Variablen R¹ bis R¹⁶ für F steht.

5. Verwendung nach Anspruch 1, wobei mindestens R⁴, R⁸, R¹² und R¹⁶ für F stehen.

6. Verwendung nach Anspruch 1, wobei R⁴, R⁸, R¹² und R¹⁶ für F stehen und R¹, R², R³, R⁵, R⁶, R⁷, R⁹, R¹⁰, R¹¹, R¹³, R¹⁴ und R¹⁵ für H stehen.

7. Verwendung nach Anspruch 1, wobei M für Al³⁺ steht, R⁴, R⁸, R¹² und R¹⁶ für F stehen und R¹, R², R³, R⁵, R⁶, R⁷, R⁹, R¹⁰, R¹¹, R¹³, R¹⁴ und R¹⁵ für H stehen.

8. Verwendung nach Anspruch 1, wobei es sich bei der flüchtigen organischen Verbindung um ein Amin, eine stickstoffhaltige organische Verbindung außer Aminen, eine schwefelhaltige organische Verbindung, Phosphin, einen Alkohol, eine Carbonylverbindung (einschließlich Ketonen, Aldehyden, Estern, Ethern), Wasser, eine aromatische Verbindung, ein Alken oder ein Alkin, vorzugsweise Aceton, handelt.

9. Verwendung nach Anspruch 1, wobei die Verbindung der Formel (I) als Sensorschicht in einem Chemiresistor, einem Kondensator, einem Feldeffekttransistor (FET), einem optikbasierten Sensor oder einem massebasierten Sensor enthalten ist.

10. Sensor zum Nachweis eines Dampfs einer flüchtigen organischen Verbindung, wobei der Sensor eine Verbindung der Formel (I) 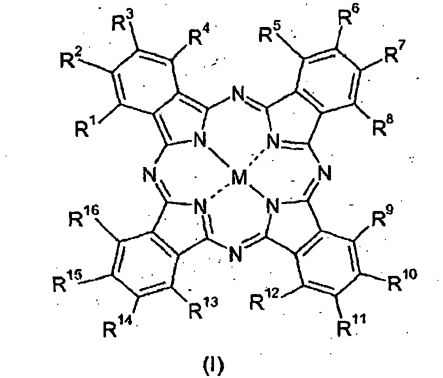 umfasst, wobei:
M aus der Gruppe bestehend aus Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺ und V⁵⁺ ausgewählt ist; und
R¹ bis R¹⁶ jeweils unabhängig für ein H oder eine elektronenziehende Gruppierung, die aus der Gruppe bestehend aus -NO₂, -NH₃⁺, -SO₃H, -CN, -C(O)Cl, -COOH, -CHO, -F, -Cl, -Br, -I, -CF₃ und -CCl₃ ausgewählt ist, steht,
mit der Maßgabe, dass nicht alle Variablen R¹ bis R¹⁶ für H stehen.

## Revendications

1. Utilisation d'un composé de formule (I) 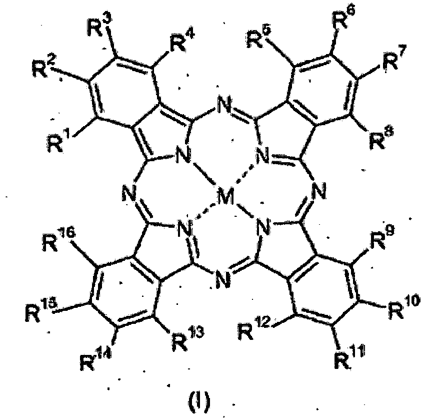 en tant que détecteur de vapeurs de composé organique volatil,
M étant choisi dans le groupe constitué par Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺ et V⁵⁺ ; et
chacun des R¹ jusqu'à R¹⁶ étant indépendamment un H ou un fragment de groupe électroattracteur choisi dans le groupe constitué par -NO₂, -NH₃⁺, -SO₃H, -CN, -C(O)Cl, -COOH, -CHO, -F, -Cl, -Br, - I, -CF₃ et -CCl₃,
à condition que tous les R¹ jusqu'à R¹⁶ ne soient pas H.

2. Utilisation selon la revendication 1, M étant Al³⁺ ou Fe³⁺.

3. Utilisation selon la revendication 1, M étant Al³⁺.

4. Utilisation selon la revendication 1, au moins un des R¹ jusqu'à R¹⁶ étant F.

5. Utilisation selon la revendication 1, au moins R⁴, R⁸, R¹² et R¹⁶ étant F.

6. Utilisation selon la revendication 1, R⁴, R⁸, R¹² et R¹⁶ étant F et R¹, R², R³, R⁵, R⁶, R⁷, R⁹, R¹⁰, R¹¹, R¹³, R¹⁴ et R¹⁵ étant H.

7. Utilisation selon la revendication 1, M étant Al³⁺, R⁴, R⁸, R¹² et R¹⁶ étant F et R¹, R², R³, R⁵, R⁶, R⁷, R⁹, R¹⁰, R¹¹, R¹³, R¹⁴ et R¹⁵ étant H.

8. Utilisation selon la revendication 1, le composé organique volatil étant une aminé, un composé organique contenant de l'azote outre une amine, un composé organique contenant du soufre, une phosphine, un alcool, un composé de type carbonyle (comprenant les cétones, les aldéhydes, les esters, les éthers), de l'eau, un composé aromatique, un alcène ou un alcyne, préférablement l'acétone.

9. Utilisation selon la revendication 1, le composé de formule (I) étant constitué comme une couche de détection dans une chimiorésistance, un condensateur, un transistor à effet de champ (FET), un détecteur optique ou un détecteur basé sur la masse.

10. Détecteur pour la détection de vapeurs de composé organique volatil, le détecteur comprenant un composé de formule (I) 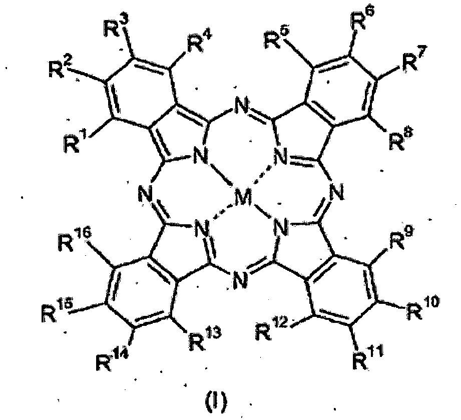
M étant choisi dans le groupe constitué par Mn²⁺, Mg²⁺, Ca²⁺, B³⁺, Fe³⁺, Al³⁺, Ga³⁺, In³⁺, Ce³⁺, Sc³⁺, Zr⁴⁺, Ti⁴⁺, Sn⁴⁺ et V⁵⁺ ; et
chacun des R¹ jusqu'à R¹⁶ étant indépendamment un H ou un fragment de groupe électroattracteur choisi dans le groupe constitué par -NO₂, -NH₃⁺, -SO₃H, -CN, -C(O)Cl, -COOH, -CHO, -F, -Cl, -Br, - I, -CF₃ et -CCl₃,
à condition que tous les R¹ jusqu'à R¹⁶ ne soient pas H.
